# EUROPEAN PATENT APPLICATION

(11) **EP 4 826 991 A1**
(43) Date of publication of application: **21.10.2026**
(21) Application number: 24929857.1
(22) Date of filing: 11.07.2024
(51) Int. Cl.: H02S 50/00, G08B 21/02, G08B 21/18, G06F 3/14

(54) **METHOD AND APPARATUS FOR MONITORING PHOTOVOLTAIC SYSTEM**

(30) Priority: 15.03.2024 KR 20240036679
(71) Applicant: Hanwha Solutions Corporation, Jung-gu Seoul 04541 (KR)
(72) Inventor: PARK, Jin Woo, Seoul 04541 (KR)
(74) Representative: Mooser, Sebastian Thomas
(86) International application number: PCT/KR2024/009973
(87) International publication number: WO 2025/192795

(57) **Abstract**

Provided are a method and apparatus for monitoring a solar photovoltaic system, wherein the method includes selecting a plurality of components included in a solar photovoltaic system to be monitored, mapping the plurality of components and a connection structure between the plurality of components on a screen of a user terminal, and outputting alarm information notifying an error in at least one of the plurality of components and the connection structure between the plurality of components.

## Description

### Technical Field

The present disclosure relates to a method and apparatus for monitoring a solar photovoltaic system.

### Background Art

A solar photovoltaic system may measure voltage and current as data for monitoring an amount of power generation by each of solar cell modules or a total amount of power generation and periodically or continuously provide the data to an external server or a terminal.

An existing solar photovoltaic system is implemented so that each of solar cell modules measures voltage and current and transmits the measured voltage and current to each of an inverter or a gateway and the like. Each of the solar cell modules needs to include components for measuring voltage and measuring current, and thus, structures of the solar cell modules may be complicated and cost prices thereof may increase.

In addition, as the number of solar cell modules included in a solar photovoltaic system increases, an amount of data transmitted and received between the solar cell modules and a gateway (or an inverter) also increases, and thus, issues, such as lower data reception and management efficiency of the gateway and the like, or lower data transmission rates due to communication interference, may occur.

Meanwhile, conventionally, after completing the installation of a solar photovoltaic system, whether or not the solar photovoltaic system normally operates may be identified, in detail, finding a component in which an error occurs may not be easy, and even in the case where the component in which the error occurs is found, a solution may not be easily found. In addition, an existing method of monitoring a solar photovoltaic system only provides information regarding individual modules and thus causes inconvenience to users who want information regarding more components. Therefore, a demand for technologies to solve the issues described above has increased.

The foregoing background art is technical information that the inventor has possessed for derivation of the present disclosure or has acquired during the derivation process of the present disclosure, and may not be necessarily known art disclosed to the general public prior to the filing of the present disclosure.

### Detailed Description of Disclosure

### Technical Problem

The present disclosure provides a method and apparatus for monitoring a solar photovoltaic system. In addition, provided is a computer-readable recording medium having recorded thereon a program for causing a computer to execute the above method.

The problems to be solved by the present disclosure are not limited to the problems mentioned above, and other problems and advantages of the present disclosure that are not mentioned may be understood by the following description and more clearly understood by embodiments of the present disclosure. In addition, it will be appreciated that the problems and advantages to be solved by the present disclosure may be implemented by means and combinations thereof defined in claims. **Technical Solution**

As a technical means for solving the above-described technical problem, a first aspect of the present disclosure provides a method including: selecting a plurality of components included in a solar photovoltaic system to be monitored; mapping the plurality of components and a connection structure between the plurality of components on a screen of a user terminal; and outputting alarm information notifying an error in at least one of the plurality of components and the connection structure between the plurality of components.

A second aspect of the present disclosure provides an apparatus including: at least one memory; and at least one processor, wherein the at least one processor is configured to select a plurality of components included in a solar photovoltaic system to be monitored, map the plurality of components and a connection structure between the plurality of components on a screen of a user terminal, and output alarm information notifying an error in at least one of the plurality of components and the connection structure between the plurality of components.

A third aspect of the present disclosure provides a computer-readable recording medium having recorded thereon a program for causing a computer to execute the method according to the first aspect.

In addition, another method for implementing the present disclosure, another system, and a computer-readable recording medium having stored therein a program for executing the method may be further provided.

Other aspects, features and advantages other than those described above will become apparent from the following drawings, claims, and detailed description of the disclosure.

### Advantageous Effects of Disclosure

According to the problem-solving means of the present disclosure described above, in the present disclosure, more accurate and intuitive alarm information may be provided to a user or an installer by selecting a plurality of components included in a solar photovoltaic system to be monitored, mapping the plurality of components and a connection structure between the plurality of components on a screen of a user terminal, and outputting alarm information notifying an error in at least one of the plurality of components and the connection structure between the plurality of components.

Also, in the present disclosure, in a process of installing the solar photovoltaic system, by outputting the alarm information notifying the error in the at least one of the plurality of components and the connection structure between the plurality of components, error information may be identified in real time even before installation is completed to allow the user or the installer to more quickly take an appropriate action.

In addition, the present disclosure may provide the effect of allowing the user or the installer to easily control the overall solar photovoltaic system by monitoring various components included in the solar photovoltaic system as well as individual modules.

The effects of the present disclosure are not limited to those mentioned above, and other effects not mentioned may be clearly understood by those skilled in the art from the description below.

### Brief Description of Drawings

FIG. 1 is a view illustrating an example of a system for monitoring a solar photovoltaic system, according to an embodiment.
FIG. 2A is a block diagram illustrating an example of a user terminal according to an embodiment.
FIG. 2B is a block diagram illustrating an example of a server according to an embodiment.
FIG. 3 is a block diagram illustrating an example of a solar photovoltaic system according to an embodiment.
FIG. 4 is a flowchart illustrating an example of a method of monitoring a solar photovoltaic system, according to an embodiment.
FIG. 5 is a view illustrating an example in which a processor maps a plurality of components included in a solar photovoltaic system and a connection structure between the plurality of components, according to an embodiment.
FIG. 6 is a view illustrating another example in which a processor maps a plurality of components included in a solar photovoltaic system and a connection structure between the plurality of components, according to an embodiment.
FIG. 7 is a view illustrating an example in which a processor outputs alarm information notifying an error in at least one of a plurality of components and a connection structure between the plurality of components, according to an embodiment.

### Best Mode

A method according to an embodiment of the present disclosure may select a plurality of components included in a solar photovoltaic system to be monitored. In addition, the method may map the plurality of components and a connection structure between the plurality of components on a screen of a user terminal. Also, the method may output alarm information notifying an error in at least one of the plurality of components and the connection structure between the plurality of components.

### Mode for Invention

Hereinafter, various embodiments of the present disclosure are described in connection with the accompanying drawings. Various embodiments of the present disclosure may be modified in various ways and have various embodiments, and particular embodiments are illustrated in the drawings and related detailed descriptions are given. However, it should be understood that various embodiments of the present disclosure are not intended to be limited to particular embodiments, but include all modifications and/or equivalents or alternatives included in the spirit and scope of various embodiments of the present disclosure. In connection with the description of the drawings, similar reference numerals are used for similar components.

Expressions such as "comprise." or "may comprise." that may be used in various embodiments of the present disclosure refer to the presence of a disclosed corresponding function, operation, component, or the like, and do not limit one or more additional functions, operations, components, or the like. In addition, in various embodiments of the present disclosure, it should be understood that the terms "comprise." or "have." specify the presence of stated features, integers, steps, operations, elements, components, or combinations thereof but do not preclude the presence or addition of one or more other features, integers, steps, operations, elements, components, and/or combinations thereof.

In various embodiments of the present disclosure, the expressions such as "or" include any and all combinations of words listed together. For example, "A or B" may include A, B, or both A and B.

The expressions such as "first" or "second" used in various embodiments of the present disclosure may modify various components of various embodiments, but do not limit the corresponding components. For example, the above expressions do not limit the order and/or importance of the corresponding components. The above expressions may be used to distinguish one component from another. For example, a first user device and a second user device are both user devices and indicate different user devices. For example, a first component may be referred to as a second component, and similarly, the second component may also be referred to as the first component without departing from the scope of various embodiments of the present disclosure.

In an embodiment of the present disclosure, the terms such as "module", "unit", and "part" are used to refer to components that perform at least one function or operation, and the components may be implemented as hardware or software or a combination of hardware and software. In addition, a plurality of "modules," "units," and "parts" may be integrated into at least one module or chip and implemented as at least one processor, except for the case where each needs to be implemented as individual particular hardware.

The terms used in various embodiments of the present disclosure are merely used to describe a particular embodiment and are not intended to limit various embodiments of the present disclosure. The singular forms are intended to include the plural forms as well, unless the context clearly indicates otherwise.

Unless otherwise defined, all terms including technical and scientific terms used herein have the same meaning as commonly understood by those skilled in the art to which various embodiments of the present disclosure belong.

Terms, such as those defined in commonly used dictionaries, should be interpreted as having a meaning that is consistent with their meaning in the context of the relevant art and will not be interpreted in an idealized or overly formal sense unless expressly so defined herein.

Hereinafter, various embodiments of the present disclosure are described in detail by using the attached drawings.

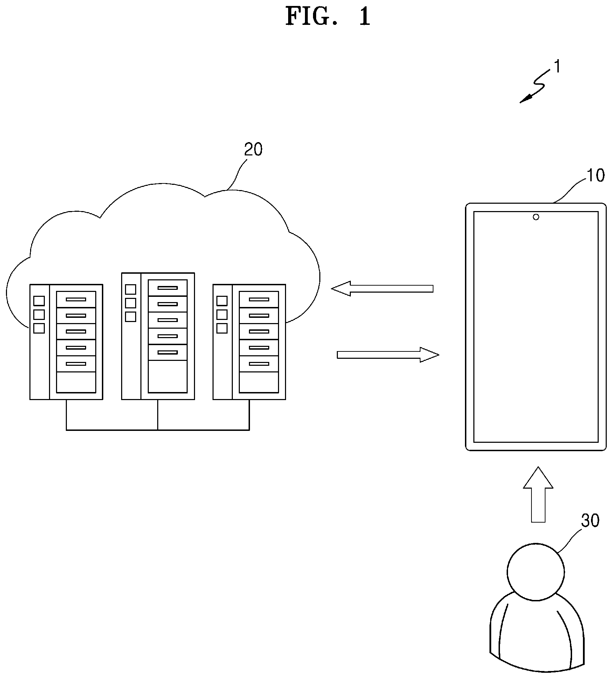

FIG. 1 is a view illustrating an example of a system for monitoring a solar photovoltaic system, according to an embodiment.

Referring to FIG. 1, a system 1 includes a user terminal 10 and a server 20. For example, the user terminal 10 and the server 20 may be connected by a wired or wireless communication method to transmit and receive data to and from each other.

For convenience of description, the system 1 is illustrated in FIG. 1 as including the user terminal 10 and the server 20, but is not limited thereto. For example, the system 1 may include another external device (not shown), and operations of the user terminal 10 and the server 20 described below may be implemented by a single device (e.g., the user terminal 10 or the server 20) or a plurality of devices.

The user terminal 10 may be a computing device that is provided with a display device and a device (e.g., a keyboard, a mouse, or the like) for receiving a user input and includes a memory and a processor. For example, the display device may be implemented as a touch screen to receive a user input. For example, the user terminal 10 may include a notebook PC, a desktop PC, a laptop, a tablet computer, a smartphone, or the like, but is not limited thereto.

The server 20 may be an apparatus that communicates with an external device (not shown), including the user terminal 10. As an example, the server 20 may be an apparatus that stores various types of data including location information, direction information, energy information, connection information, alarm information, error information, solution information, and the like regarding each of a plurality of components. Alternatively, the server 20 may be a computing apparatus that includes a memory and a processor and has a computational capability. As an example, the server 20 may perform at least some of operations of the user terminal 10 described below with reference to FIGS. 1 to 7. For example, the server 20 may be a cloud server, but is not limited thereto.

The user terminal 10 maps a solar photovoltaic system on a screen of the user terminal to allow a user 30 to monitor the solar photovoltaic system. For example, the user terminal 10 may map a plurality of components included in the solar photovoltaic system and a connection structure between the plurality of components on the screen of the user terminal 10.

The user terminal 10 according to an embodiment may map the plurality of components and the connection structure between the plurality of components on the screen of the user terminal 10, on the basis of location information regarding each of the plurality of components. For example, the user terminal 10 may acquire the location information regarding each of the plurality of components and map the plurality of components and the connection structure between the plurality of components on the screen of the user terminal, on the basis of the location information regarding each of the plurality of components. Here, each of the plurality of components mapped on the screen of the user terminal may include direction information based on a location of the user terminal.

The user terminal 10 according to an embodiment may map the plurality of components and the connection structure between the plurality of components on the screen of the user terminal 10, on the basis of state information regarding each of the plurality of components. For example, the user terminal 10 may acquire the state information regarding each of the plurality of components and in response to a selection of at least one component by a user from among the plurality of components, map state information regarding the selected at least one component on the screen of the user terminal 10. Here, the state information may include energy information regarding each of the plurality of components and connection information regarding each of the plurality of components. Here, the user terminal 10 may output, on the basis of the state information, alarm information notifying an error in at least one of the plurality of components and the connection structure between the plurality of components.

Also, the user terminal 10 outputs alarm information notifying an error regarding the solar photovoltaic system. As an example, the user terminal 10 may output alarm information notifying errors in the plurality of components constituting the solar photovoltaic system. As another example, the user terminal 10 may output alarm information notifying an error in the connection structure between the plurality of components constituting the solar photovoltaic system.

Also, the user terminal 10 outputs at least one of error information and solution information according to the alarm information. For example, the user terminal 10 may output at least one of the error information and the solution information in response to a selection of the alarm information by the user.

Meanwhile, through an application installed on the user terminal 10, the user terminal 10 may provide a result of mapping the plurality of components and the connection structure between the plurality of components or may provide alarm information notifying an error in at least one of the plurality of components and the connection structure between the plurality of components. Here, the application may be a software program installed for the purpose of activities of monitoring by the user 30 with respect to the solar photovoltaic system. For example, the user 30 may perform, through the application, various monitoring activities with respect to the solar photovoltaic system, such as identifying the result of mapping the plurality of components included in the solar photovoltaic system and the connection structure between the plurality of components on the screen of the user terminal 10 or identifying the alarm information notifying the error in at least one of the plurality of components and the connection structure between the plurality of components.

Meanwhile, for convenience of description, throughout the description, the user terminal 10 selects the plurality of components included in the solar photovoltaic system to be monitored, maps the plurality of components and the connection structure between the plurality of components on the screen of the user terminal, and outputs the alarm information notifying the error in at least one of the plurality of components and the connection structure between the plurality of components, but is not limited thereto. For example, at least some of operations performed by the user terminal 10 may be performed by the server 20.

In other words, at least some of the operations of the user terminal 10 described below with reference to FIGS. 1 to 7 may be performed by the server 20. For example, the server 20 may select a plurality of components included in the solar photovoltaic system to be monitored, map the plurality of components and a connection structure between the plurality of components on the screen of the user terminal, and output alarm information notifying an error in at least one of the plurality of components and the connection structure between the plurality of components.

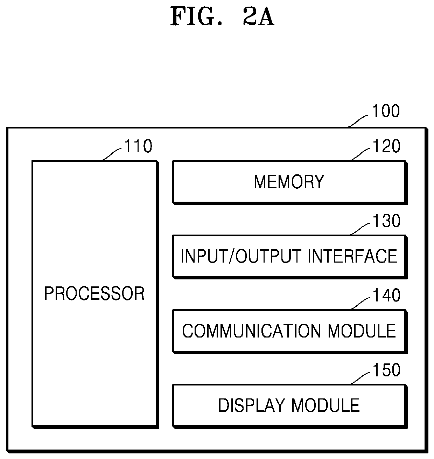

FIG. 2A is a block diagram illustrating an example of a user terminal according to an embodiment.

Referring to FIG. 2A, a user terminal 100 includes a processor 110, a memory 120, an input/output interface 130, a communication module 140, and a display module 150. For convenience of description, only components related to the present disclosure are shown in FIG. 2A. Accordingly, in addition to the components shown in FIG. 2A, other general-purpose components may be further included in the user terminal 100. In addition, it is obvious to those skilled in the art related to the present disclosure that the processor 110, the memory 120, the input/output interface 130, the communication module 140, and the display module 150 shown in FIG. 2A may be implemented as independent devices.

The processor 110 may process instructions of a computer program by performing basic arithmetic, logic, and input/output operations. Here, the instructions may be provided from the memory 120 or an external apparatus (e.g., the server 20 or the like). Also, the processor 110 may generally control operations of the other components included in the user terminal 100.

The processor 110 selects a plurality of components included in a solar photovoltaic system to be monitored. As an example, the processor 110 may select a power generation unit, a storage unit, a system unit, a consumption unit, and a supply unit as the plurality of components included in the solar photovoltaic system to be monitored. As another example, the processor 110 may select the power generation unit, the storage unit, the system unit, and the consumption unit as the plurality of components included in the solar photovoltaic system to be monitored. However, the examples of selecting the plurality of components included in the solar photovoltaic system to be monitored are not limited to those described above.

The processor 110 maps the plurality of components and a connection structure between the plurality of components on a screen of the user terminal. For example, the processor 110 may output a result of mapping the plurality of components and the connection structure between the plurality of components through the display module 150 or a separate display device (not shown).

In other words, the processor 110 may map not only individual modules but also the plurality of components included in the solar photovoltaic system and the connection structure between the plurality of components and provide a result of the mapping to a user.

The processor 110 outputs alarm information notifying an error in at least one of the plurality of components and the connection structure between the plurality of components. For example, on the basis of state information, the processor 110 may output the alarm information notifying the error in at least one of the plurality of components and the connection structure between the plurality of components.

Meanwhile, the processor 110 may output at least one of error information and solution information in response to a selection of the alarm information by the user. The error information may include a location at which the error occurs, content of the error, and the like that the alarm information intends to notify. The solution information may include content regarding a solution method to the error that the alarm information intends to notify. The user may not only know, on the basis of the alarm information, that an error occurs in an operation of the solar photovoltaic system, but also may take, on the basis of the error information and the solution information, a quicker action in a solution to the error in the solar photovoltaic system.

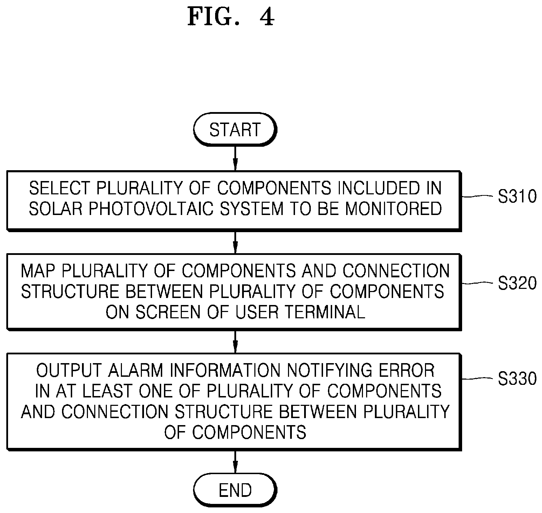

Detailed examples in which the processor 110 according to an embodiment operates are described with reference to FIGS. 4 to 7.

The processor 110 may be implemented as an array of a plurality of logic gates or may be implemented as a combination of a general-purpose microprocessor and a memory that storing a program that may be executed on the microprocessor. For example, the processor 110 may include a general-purpose processor, a central processing unit (CPU), a microprocessor, a digital signal processor (DSP), a controller, a microcontroller, a state machine, and the like. In some environments, the processor 110 may include an application specific integrated circuit (ASIC), a programmable logic device (PLD), a field programmable gate array (FPGA), and the like. For example, the processor 110 may refer to a combination of processing devices, such as a combination of a digital signal processor (DSP) and a microprocessor, a combination of a plurality of microprocessors, a combination of one or more microprocessors combined with a digital signal processor (DSP) core, or any other combination of such components.

The memory 120 may include any non-transitory computer-readable recording medium. As an example, the memory 120 may include a permanent mass storage device such as random access memory (RAM), read only memory (ROM), a disk drive, a solid state drive (SSD), or flash memory. As another example, the permanent mass storage device such as ROM, an SSD, flash memory, or a disk drive may be a separate permanent storage device distinct from a memory. Also, the memory 120 may store an operating system (OS) and at least one program code (e.g., a code for the processor 110 to perform operations described below with reference to FIGS. 4 to 7 ).

The software components may be loaded from a computer-readable recording medium separate from the memory 120. The separate computer-readable recording medium may be a recording medium that may be directly connected to the user terminal 100, for example, may include a computer-readable recording medium such as a floppy drive, a disk, a tape, a DVD/CD-ROM drive, or a memory card. Alternatively, the software components may also be loaded into the memory 120 through the communication module 140 rather than a computer-readable recording medium. For example, at least one program may be loaded into the memory 120 on the basis of a computer program installed by files which are provided through the communication module 140 by developers or a file distribution system that distributes installation files of an application (e.g., a computer program or the like for the processor 110 to perform an operation described below with reference to FIGS. 4 to 7).

The input/output interface 130 may be a unit for interfacing with a device (e.g., a keyboard, a mouse, or the like) for an input and/or output, which may be connected to the user terminal 100 or included in the user terminal 100. The input/output interface 130 may be configured separately from the processor 110, but is not limited thereto, and the input/output interface 130 may be configured to be included in the processor 110.

The communication module 140 may provide a component or function for the server 20 and the user terminal 100 to communicate with each other through a network. In addition, the communication module 140 may provide a component or function for the user terminal 100 to communicate with another external device. For example, a control signal, a command, data, and the like provided under control of the processor 110 may be transmitted to the server 20 and/or an external device through the communication module 140 and the network.

The display module 150 may display the plurality of components and the connection structure between the plurality of components, which are mapped, the alarm information, location information, direction information, state information, and the like. The display module 150 may include at least one of a liquid crystal display, a thin film transistor-liquid crystal display, an organic light-emitting diode, a flexible display, and a three-dimensional display (3D display). Also, two or more display modules 150 may be present according to an implementation type of the user terminal 100.

Meanwhile, the display module 150 may constitute a touch screen by forming a mutual layer structure together with a touch pad for receiving an input from the user. In the case where the display module 150 and the touch pad are constituted as the touch screen by forming the mutual layer structure, the display module 150 may be used as an input device in addition to an output device. For example, the display module 150 constituted as the touch screen may automatically initiate a mapping or outputting operation described below by detecting a touch input from the user in a certain area.

The user may identify, through the display module 150, the plurality of components, the connection structure between the plurality of components, which are mapped, the alarm information, the location information, the direction information, the state information, and the like and in particular, may identify the state information, the alarm information, the error information, the solution information, and the like that change in real time or according to a certain period. However, the example of the display module 150 is not limited to that described above.

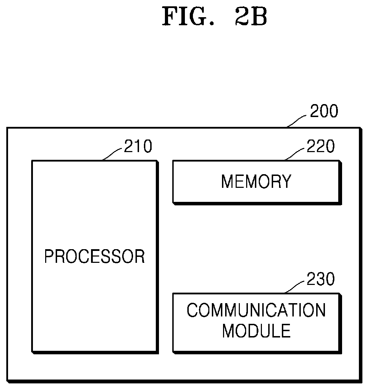

FIG. 2B is a block diagram illustrating an example of a server according to an embodiment.

Referring to FIG. 2B, a server 200 includes a processor 210, a memory 220, and a communication module 230. For convenience of description, only components related to the present disclosure are shown in FIG. 2B. Accordingly, in addition to the components shown in FIG. 2B, other general-purpose components may be further included in the server 200. Also, it is obvious to those skilled in the art related to the present disclosure that the processor 210, the memory 220, and the communication module 230 shown in FIG. 2B may be implemented as independent devices.

The processor 210 may select a plurality of components included in a solar photovoltaic system to be monitored. Also, the processor 210 may map the plurality of components and a connection structure between the plurality of components on a screen of a user terminal. In addition, the processor 210 may output alarm information notifying an error in at least one of the plurality of components and the connection structure between the plurality of components.

In other words, at least one of the operations of the processor 110 described above with reference to FIG. 2A may be performed by the processor 210. In this case, the user terminal 100 may output information, which is transmitted from the server 200, through the display module 150 or a separate display device (not shown).

Meanwhile, the implementation example of the processor 210 is the same as the implementation example of the processor 110 described above with reference to FIG. 2A, and thus, the detailed description thereof is omitted.

The memory 220 may store various types of data, such as data needed for an operation of the processor 210 and data generated according to the operation of the processor 210. Also, the memory 220 may store an operating system (OS) and at least one program (e.g., a program and the like needed for the processor 210 to operate).

Meanwhile, the implementation example of the memory 220 is the same as the implementation example of the memory 120 described above with reference to FIG. 2A, and thus, the detailed description thereof is omitted.

The communication module 230 may provide a component or function for the server 200 and the user terminal 100 to communicate with each other through a network. Also, the communication module 230 may provide a component or function for the server 200 to communicate with another external device. For example, a control signal, a command, data, and the like provided under control of the processor 210 may be transmitted to the user terminal 100 and/or an external device through the communication module 230 and the network.

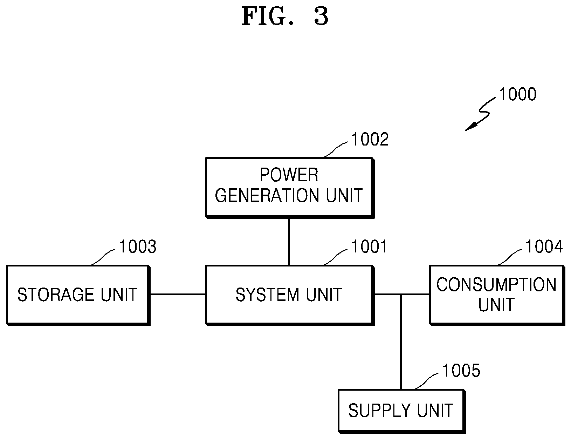

FIG. 3 is a view illustrating an example of a solar photovoltaic system according to an embodiment.

Referring to FIG. 3, a solar photovoltaic system 1000 refers to a system that acquires solar energy, converts the acquired solar energy into electrical energy, stores the converted electrical energy, and then supplies the converted or stored electrical energy to a load that is a consumption source or to a grid. The solar photovoltaic system 1000 may include a system unit 1001, a power generation unit 1002, a storage unit 1003, a consumption unit 1004, and a supply unit 1005. For convenience of description, only some components of the solar photovoltaic system 1000 are shown in FIG. 3. Accordingly, in addition to the components shown in FIG. 3, other general-purpose components may be further included in the solar photovoltaic system 1000.

The system unit 1001 operates as a central server for controlling the solar photovoltaic system 1000. For example, the system unit may include a main board (e.g., an EMS board or the like).

The power generation unit 1002 acquires solar energy and converts the acquired solar energy into electrical energy. For example, the power generation unit may include a photovoltaic module, a photovoltaic inverter, and the like.

The storage unit 1003 stores the electrical energy converted by the power generation unit 1002. For example, the storage unit 1003 may include a battery, and the like.

The consumption unit 1004 consumes the electrical energy converted by the power generation unit 1002 or the electrical energy stored in the storage unit 1003. For example, the consumption unit 1004 may include a load, and the like.

The supply unit 1005 supplies the electrical energy converted by the power generation unit 1002 or the electrical energy stored in the storage unit 1003 to an external system, or supplies the external system with residual electrical energy remaining after in use by the consumption unit 1004. For example, the supply unit may include a grid.

In other words, the solar photovoltaic system 1000 may include a plurality of components such as the system unit 1001, the power generation unit 1002, the storage unit 1003, the consumption unit 1004, and the supply unit 1005, and each of the plurality of components may include at least one piece of equipment for performing the role of each of the plurality of components (e.g., a photovoltaic module, a photovoltaic inverter, a battery, or the like).

Meanwhile, the solar photovoltaic system 1000 may include only some components from among the components described above. For example, the solar photovoltaic system 1000 may include the system unit 1001, the power generation unit 1002, the storage unit 1003, and the consumption unit 1004.

However, the example of the solar photovoltaic system 1000 is not limited to that described above with reference to FIG. 3.

FIG. 4 is a flowchart illustrating an example of a method of monitoring a solar photovoltaic system, according to an embodiment.

Referring to FIG. 4, the method of monitoring a solar photovoltaic system includes operations processed in time series by the user terminals 10 and 100 or the processor 110 shown in FIGS. 1 and 2A. Therefore, even in the case where the above descriptions of the user terminals 10 and 100 or the processor 110 shown in FIG. 1 and FIG. 2A are omitted, the above descriptions may be applied even to the method of monitoring a solar photovoltaic system.

Also, as described above with reference to FIG. 1 and FIG. 2B, at least one of the operations of the method of FIG. 4 for monitoring a solar photovoltaic system may be processed by the servers 20 and 200 or the processor 210.

In operation S310, the processor 110 selects a plurality of components included in a solar photovoltaic system to be monitored.

For example, the processor 110 may select the plurality of components included in the solar photovoltaic system, on the basis of an input from a user. The user may input the plurality of components included in the solar photovoltaic system to be monitored. Here, the user may refer to not only a user who uses the solar photovoltaic system, but also an installer who installs the solar photovoltaic system. In other words, the processor 110 may select the plurality of components included in the solar photovoltaic system, on the basis of an input from a user who uses or installs the solar photovoltaic system.

In operation S320, the processor 110 maps the plurality of components and a connection structure between the plurality of components on a screen of a user terminal.

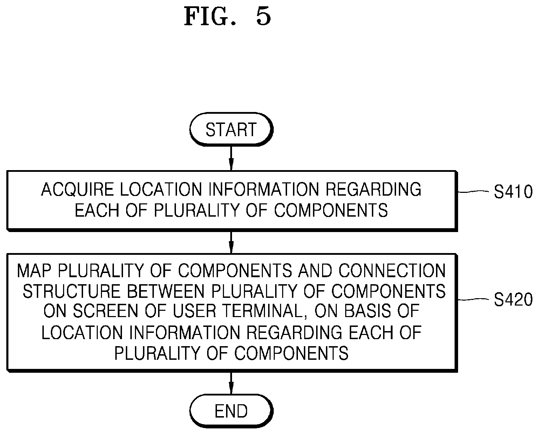

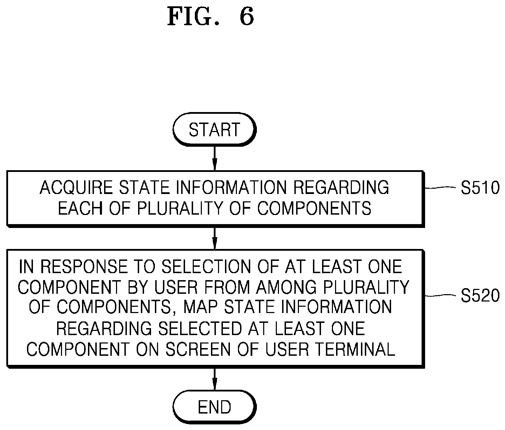

For example, the processor 110 may map the plurality of components and the connection structure between the plurality of components on the screen of the user terminal, on the basis of location information regarding each of the plurality of components. Also, the processor 110 may map state information regarding each of the plurality of components on the screen of the user terminal. A detailed description thereof is given below with reference to FIGS. 5 and 6.

In operation S330, the processor 110 outputs alarm information notifying an error in at least one of the plurality of components and the connection structure between the plurality of components.

The alarm information may be output by changing a display of at least one of the plurality of components and the connection structure between the plurality of components, which are mapped on the screen of the user terminal. As an example, in the case where an error occurs in one component from among the plurality of components mapped on the screen of the user terminal, the alarm information may be output with a change in a display of the component in which the error occurs. The display of the component in which the error occurs may be output with a change in a color, a shape, a sound, or the like and is not limited to the example described above. However, the example of the alarm information is not limited to that described above.

Also, the alarm information may be output on the screen of the user terminal on the basis of a preset error level. Here, the error level may be classified on the basis of whether or not the solar photovoltaic system is operable. For example, in the case where the solar photovoltaic system is not operable, the error level corresponds to a higher level, and the alarm information may be output on the screen of the user terminal on the basis of the error level corresponding to the higher level. However, the example of the alarm information is not limited to that described above.

FIG. 5 is a view illustrating an example in which a processor maps a plurality of components included in a solar photovoltaic system and a connection structure between the plurality of components, according to an embodiment.

Referring to FIG. 5, operations S410 and S420 may be one of additional embodiments that may be implemented after operation S310 of FIG. 4. In other words, operations S410 and S420 of FIG. 5 may be performed after operation S310 of FIG. 4, and operation S330 of FIG. 4 may be performed after operations S410 and S420 of FIG. 5.

In operation S410, the processor 110 acquires location information regarding each of a plurality of components.

The processor 110 may acquire the location information regarding each of the plurality of components through wireless reception equipment, a GPS receiver, or the like attached to at least one piece of equipment (e.g., a photovoltaic module, a photovoltaic inverter, and the like) included in the plurality of components (e.g., a power generation unit, a storage unit, a system unit, a consumption unit, a supply unit, and the like). Alternatively, the processor 110 may acquire the location information regarding each of the plurality of components through QR recognition. However, the example of acquiring the location information regarding each of the plurality of components is not limited to that described above.

In operation S420, the processor 110 maps the plurality of components and a connection structure between the plurality of components on a screen of a user terminal, on the basis of the location information regarding each of the plurality of components. For example, the processor 110 may map the plurality of components on the screen of the user terminal on the basis of the location information regarding each of the plurality of components. Also, the processor 110 may map the connection structure between the plurality of components on the screen of the user terminal on the basis of a preset connection relationship. Here, the preset connection relationship refers to a relationship established by considering performance of roles between the plurality of components and may include, for example, a relationship in which the system unit and the power generation unit are connected, a relationship in which the system unit and the storage unit are connected, a relationship in which the system unit and the consumption unit are connected, and the like.

Meanwhile, the processor 110 may generate direction information regarding each of the plurality of components on the basis of the location information regarding each of the plurality of components. In other words, each of the plurality of components mapped on the screen of the user terminal may include the direction information based on a location of the user terminal. For example, the processor 110 may output the direction information regarding each of the plurality of components, which is based on the location of the user terminal. The user may identify, through the output direction information, in which direction each of the plurality of components is present on the basis of the location of the user terminal. However, the example of the direction information is not limited to that described above.

FIG. 6 is a view illustrating another example in which a processor maps a plurality of components included in a solar photovoltaic system and a connection structure between the plurality of components, according to an embodiment.

Referring to FIG. 6, operations S510 and S520 may be one of additional embodiments that may be implemented after operation S310 of FIG. 4. In other words, operations S510 and S520 of FIG. 6 may be performed after operation S310 of FIG. 4, and operation S330 of FIG. 4 may be performed after operations S510 and S520 of FIG. 6.

In operation S510, the processor 110 acquires state information regarding each of a plurality of components.

The state information may include energy information regarding each of the plurality of components and connection information regarding each of the plurality of components.

The energy information may include information regarding a numerical value, a type, and the like of energy generated, consumed, charged/discharged, or input/output by at least one piece of equipment included in each of the plurality of components. For example, the energy information may include an energy value produced by a power generation unit, an energy value consumed by a consumption unit, an energy value charged/discharged by a storage unit, and an energy value input/output by a supply unit. However, the example of the energy information is not limited to that described above.

The connection information includes information regarding which component each of the plurality of components is connected to. For example, the connection information may include information regarding a connection relationship between the system unit and the power generation unit, information regarding a connection relationship between the system unit and the storage unit, information regarding a connection relationship between the system unit and the consumption unit, and the like. However, the examples of connection information are not limited to those described above.

Also, the state information may include equipment information regarding each of the plurality of components. For example, the equipment information may include information regarding specifications (e.g., a serial number and the like) of at least one piece of equipment included in each of the plurality of components. However, the example of the equipment information is not limited to that described above.

For example, wireless reception equipment may be attached to at least one piece of equipment included in each of the plurality of components, and the processor 110 may acquire, through the attached wireless reception equipment, at least one of the energy information, the connection information, and the equipment information regarding the at least one piece of equipment included in each of the plurality of components. Alternatively, the processor 110 may acquire equipment information including pieces of information collected from a purchase stage to a shipping stage of at least one piece of equipment included in each of the plurality of components.

In operation S520, in response to a selection of at least one component by a user from among the plurality of components, the processor 110 may map state information regarding the selected one component on a screen of a user terminal.

For example, in response to a selection of at least one component by the user from among the power generation unit, the storage unit, the system unit, the consumption unit, and the supply unit, the processor 110 may map state information regarding the selected component on the screen of the user terminal. The state information regarding the power generation unit may include the number of photovoltaic modules installed, the number of photovoltaic inverters installed, specifications of the photovoltaic modules, a photovoltaic production value that may be identified through a production CT or a PV meter, and the like. The state information regarding the storage unit may include capacity of installed batteries, the number of installed batteries, power values being charged to and discharged from the batteries, and the like. The state information regarding the system unit may include a state of the main board and the like. The state information regarding the consumption unit may include power values consumed in a house, a commercial facility, and a factory, a power value consumed in a consumption CT or a load meter, and the like. The state information regarding the supply unit may include a power value that may be purchased or sold, and the like.

In other words, the user may select a component to identify and identify state information regarding the corresponding component through the screen of the user terminal. In addition, the user may may identify equipment information regarding the corresponding component.

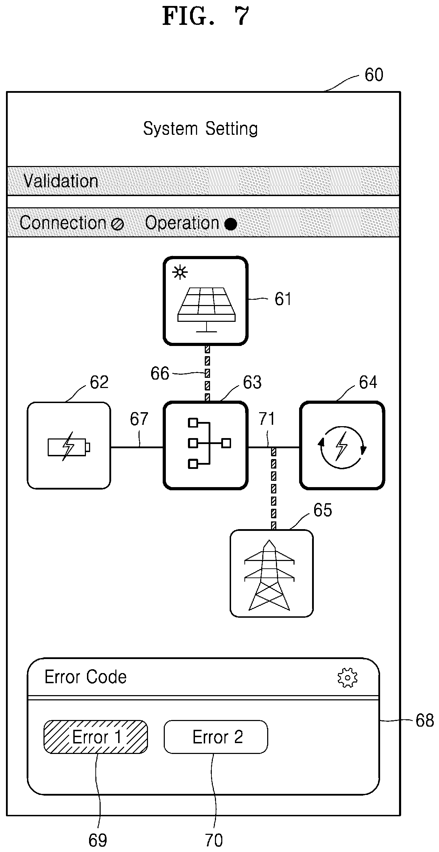

FIG. 7 is a view illustrating an example in which a processor outputs alarm information notifying an error in at least one of a plurality of components and a connection structure between the plurality of components.

Referring to FIG. 7, the processor 110 may map a plurality of components and a connection structure between the plurality of components on a screen 60 of a user terminal and output alarm information notifying an error in at least one of the plurality of components and the connection structure between the plurality of components.

First, the processor 110 may map the plurality of components and the connection structure between the plurality of components on the screen 60 of the user terminal. In detail, the processor 110 may map a power generation unit 61, a storage unit 62, a system unit 63, a consumption unit 64, and a supply unit 65 included in a solar photovoltaic system on the screen 60 of the user terminal. In addition, with respect to a connection structure between the plurality of components, the processor 110 may map a connection structure 66 between the power generation unit 61 and the system unit 63, a connection structure 67 between the storage unit 62 and the system unit 63, and a connection structure 71 among the system unit 63, the supply unit 65, and the consumption unit 64 on the screen 60 of the user terminal.

In addition, the processor 110 may output the alarm information notifying an error in at least one of the plurality of components and the connection structure between the plurality of components, which are mapped on the screen 60 of the user terminal.

The alarm information may be output with a change in a display of at least one of the plurality of components and the connection structure between the plurality of components, which are mapped on the screen of the user terminal. In the case where an error occurs in a state of the power generation unit 61, the processor 110 may change and output a display of the power generation unit 61. For example, the processor 110 may change a displayed color of the power generation unit 61, change a thickness of a displayed line, or change a shape of the displayed line to a dotted line or the like and output the same. In addition, in the case where an error occurs in a state of the connection structure 66 between the power generation unit 61 and the system unit 63, the processor 110 may change and output a display of the connection structure 66 between the power generation unit 61 and the system unit 63. For example, the processor 110 may change a displayed color of the connection structure 66 between the power generation unit 61 and the system unit 63, change a thickness of a displayed line, or change the shape of the displayed line to a dotted line or the like and output the same.

In addition, the alarm information may be output on the screen of the user terminal on the basis of a preset error level. The processor 110 may output alarm information 68 on the screen of the user terminal, on the basis of a preset error level. The alarm information 68 includes first alarm information 69 and second alarm information 70, which are output on the basis of preset error levels. The first alarm information 69 may be output on the screen of the user terminal on the basis of an error level corresponding to a higher level. Through the first alarm information 69, a user may identify that a solar photovoltaic system may not be operated. In addition, the processor 110 may output at least one of error information and solution information in response to a selection of the first alarm information 69 by the user. The second alarm information 70 may be output on the screen of the user terminal on the basis of an error level corresponding to a lower level. Through the second alarm information 70, the user may identify that the solar photovoltaic system may be operated, but an error occurs inside the solar photovoltaic system. In addition, the processor 110 may output at least one of error information and solution information in response to a selection of the second alarm information 70 by the user. In other words, the processor 110 may output alarm information on the basis of a preset error level, on the basis of whether or not the solar photovoltaic system may be operated, and according to the error level, the user may use or install the solar photovoltaic system to take an immediate action or take a later action.

According to the above description, in the present disclosure, more accurate and rapid error information may be provided to a user or an installer by selecting a plurality of components included in a solar photovoltaic system to be monitored, mapping the plurality of components and a connection structure between the plurality of components on a screen of a user terminal, and outputting alarm information notifying an error in at least one of the plurality of components and the connection structure between the plurality of components. In addition, according to the present disclosure, on the basis of the alarm information, and error information and solution information according to the alarm information, the user may reduce the time taken to install the solar photovoltaic system, and a completed solar photovoltaic system may be provided to the user through accurate installation.

Meanwhile, the above-described method may be written as a program that may be executed on a computer and may be implemented in a general-purpose digital computer that executes the program by using a computer-readable recording medium. In addition, the structure of data used in the above-described method may be recorded on a computer-readable recording medium through various types of means. The computer-readable recording medium includes a storage medium such as a magnetic storage medium (e.g., ROM, RAM, a USB, a floppy disk, a hard disk, or the like) and an optical reading medium (e.g., CD-ROM, DVD, or the like).

Meanwhile, the above-described method may be included and provided in a computer program product. The computer program product may be traded between a seller and a purchaser. The computer program product may be distributed in the form of a device-readable storage medium (e.g., compact disc read only memory (CD-ROM)) or may be distributed (e.g., downloaded or uploaded) through an application store (e.g., Play StoreTM) or directly and online between two user devices. In the case of online distribution, at least a portion of the computer program product may be at least temporarily stored or temporarily generated in a device-readable storage medium, such as a memory of a server of a manufacturer, a server of an application store, or a relay server.

Those skilled in the art related to the present embodiment may understand that the present disclosure may be implemented in a modified form without departing from the essential characteristics of the above description. Therefore, the disclosed methods should be considered from an illustrative viewpoint rather than a restrictive viewpoint, and the scope thereof is defined by claims rather than the foregoing description and should be construed as including all differences falling within the scope equivalent thereto.

## Claims

1. A method comprising:
selecting a plurality of components included in a solar photovoltaic system to be monitored;
mapping the plurality of components and a connection structure between the plurality of components on a screen of a user terminal; and
outputting alarm information notifying an error in at least one of the plurality of components or the connection structure between the plurality of components.

2. The method of claim 1, wherein the mapping comprises: acquiring location information regarding each of the plurality of components; and mapping the plurality of components and the connection structure between the plurality of components on the screen of the user terminal, on the basis of the location information regarding each of the plurality of components, and each of the plurality of components mapped on the screen of the user terminal comprises direction information based on a location of the user terminal.

3. The method of claim 1, wherein the mapping comprises: acquiring state information regarding each of the plurality of components; and in response to a selection of at least one component by a user from among the plurality of components, mapping state information regarding the selected at least one component on the screen of the user terminal, the state information regarding each of the plurality of components comprises energy information regarding each of the plurality of components and connection information regarding each of the plurality of components, and the outputting comprises outputting, on the basis of the state information, the alarm information notifying the error in the at least one of the plurality of components or the connection structure between the plurality of components.

4. The method of claim 1, wherein the alarm information is output with a change in a display of at least one of the plurality of components or the connection structure between the plurality of components, which are mapped on the screen of the user terminal.

5. The method of claim 1, wherein the alarm information is output on the screen of the user terminal on the basis of a preset error level, and the preset error level is classified on the basis of whether or not the solar photovoltaic system is operable.

6. The method of claim 5, further comprising outputting at least one of error information or solution information in response to a selection of the alarm information by the user.

7. An apparatus comprising:
at least one memory; and
at least one processor, wherein the at least one processor is configured to select a plurality of components included in a solar photovoltaic system to be monitored, map the plurality of components and a connection structure between the plurality of components on a screen of a user terminal, and output alarm information notifying an error in at least one of the plurality of components or the connection structure between the plurality of components.

8. The apparatus of claim 7, wherein the at least one processor is further configured to acquire location information regarding each of the plurality of components and map the plurality of components and the connection structure between the plurality of components on the screen of the user terminal, on the basis of the location information regarding each of the plurality of components, and each of the plurality of components mapped on the screen of the user terminal comprises direction information based on a location regarding the user terminal.

9. The apparatus of claim 7, wherein the at least one processor is further configured to acquire state information regarding each of the plurality of components, in response to a selection of at least one component by a user from among the plurality of components, map state information regarding the selected at least one component on the screen of the user terminal, and output, on the basis of the state information, the alarm information notifying the error in the at least one of the plurality of components or the connection structure between the plurality of components, and the state information regarding each of the plurality of components comprises energy information regarding each of the plurality of components and connection information regarding each of the plurality of components.

10. The apparatus of claim 7, wherein the alarm information is output with a change in a display of at least one of the plurality of components or the connection structure between the plurality of components, which are mapped on the screen of the user terminal.

11. The apparatus of claim 7, wherein the alarm information is output on the screen of the user terminal on the basis of a preset error level, and the preset error level is classified on the basis of whether or not the solar photovoltaic system is operable.

12. The apparatus of claim 11, wherein the at least one processor is further configured to output at least one of error information or solution information in response to a selection of the alarm information by the user.

13. A computer-readable recording medium having recorded thereon a program for causing a computer to execute the method of claim 1.
